# EUROPEAN PATENT APPLICATION

(11) **EP 1 990 394 A1**
(43) Date of publication of application: **12.11.2008**
(21) Application number: 07107685.5
(22) Date of filing: 08.05.2007
(51) Int. Cl.: C09J 163/00, C09J 11/04

(54) **Epoxy-resin adhesive and method for bonding using such an epoxy resin adhesive**

(71) Applicant: Technische Universiteit Delft, 2628 CN Delft (NL)
(72) Inventor: Bhowmik, Shantanu, 2611 LG, Delft (NL); Poulis, Johannes Aaldert, 2312 KW, Leiden (NL); Benedictus, Rinze, 2612 DJ, Delft (NL)
(74) Representative: Van Breda, Jacobus

(57) **Abstract**

The invention relates to an epoxy resin adhesive comprising a dotation of nano-substances, wherein the nano-substances are selected from the group comprising carbon-fibre nanotubes, carbon nano-fibres, silicate nano powders, and wherein the nano-substances are dispersed in the adhesive with a weight ratio of at least 1% and wherein the nano-substances are carbon-fibre nanotubes having a weight ratio of approximately 2%.

## Description

The invention is concerned with an epoxy-resin adhesive as well as a method of applying such an epoxy-resin adhesive.

According to the prior art it is known to apply an epoxy-resin adhesive for bonding purposes.

The invention has as an objective to improve the bonding strength for which purpose the epoxy-resin adhesive according to the invention comprises a dotation of nano-substances.

Preferably the nano-substances are selected from the group comprising carbon fibre nanotubes, carbon nano-fibres and silicate nano powders.

Preferably the nano-substances are dispersed in the adhesive with a weight ratio of at least one percent. When the nano-substances are carbon-fibre nanotubes, best results are achieved when the epoxy-resin adhesive has carbon-fibre nanotubes with a weight ratio of approximately two percent related to the total weight of the epoxy-resin adhesive.

In case of silicate nano powders, the weight ratio is preferably set at approximately 5%.

The method for bonding comprising the step of applying an epoxy-resin adhesive is in another aspect of the invention characterized in that the epoxy-resin adhesive is subjected to radiation selected from the group comprising electron beam irradiation, ultra violet radiation, and mixed field radiation.

The measure of radiation in itself improves the bonding strength of the epoxy-resin adhesive independent from the application of nano-substances. Hence, the method of the invention relates to both epoxy-resin adhesive with and without nano-substances dispersed therein.

Best results are however achieved with the method of the invention wherein prior to the adhesive being subjected to radiation, same is provided with a dotation of nano-substances.

Consistent with the preferences concerning the epoxy-resin adhesive of the invention, in the method of the invention it is advantageous that the nano-substances are provided to the adhesive at a weight ratio of at least one percent, and if carbon fibre nanotubes are applied preferably at a weight ratio of approximately two percent. When using silicate nano-powders, the weight ratio of the nano-substances can be increased up to five percent.

Appreciable results are achieved with the method of the invention when the epoxy-resin adhesive is applied on a metal. It is however also possible to apply the epoxy resin adhesive on other materials, such as polymers.

It is preferred that the metal's surface is polished and cleaned prior to the application of the epoxy-resin adhesive.

The bonding strength of the epoxy-resin adhesive can in the method of the invention be further promoted by modifying the metal's surface through the application of plasma nitriding implementation prior to the application of the epoxy-resin adhesive.

The radiation of the epoxy-resin adhesive is then applied following the application of the epoxy-resin to the metal's surface.

It is found that particularly good results can be obtained by selecting the metal from the group comprising at least steel, aluminium and titanium.

Hereinafter the invention will be further elucidated with reference to a typical example of an epoxy-resin adhesive according to the invention and a method of applying according to the invention such an epoxy-resin adhesive.

Further reference is made to the attached figure showing a lap shear tensile strength of an adhesive joint prepared by an epoxy-resin adhesive, by an epoxy-resin adhesive with a dotation of carbon-fibre nanotubes, and by the latter epoxy-resin adhesive modified by electron beam irradiation.

### Example

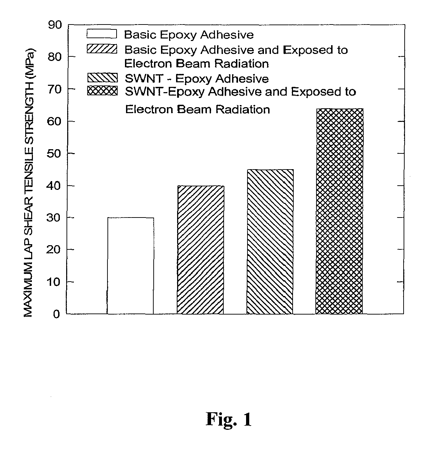

As an example an adhesive joint of titanium is prepared by using ultra high temperature resistant epoxy adhesive. The high performance nano adhesive is prepared by dispersing Single Walled Carbon Fibre Nano Tubes (SWNT) with a weight ratio of approximately 2% within the matrix adhesive. Prior to adhesive bonding, the surface of the titanium sheets is mechanically polished by wire brushing according to ASTM D 897 standard, ultrasonically cleaned and thereafter, the titanium surfaces are modified by plasma nitriding implantation. Then, the joints are exposed to electron beam radiation. Thermo Gravimetric Analysis (TGA) analysis are carried out in order to understand the physicothermal behaviour of the basic adhesive and the SWNT dispersed nano adhesive. The TGA studies show that for the basic adhesive there is a weight loss of the adhesive, however, in the case of the epoxy-SWNT nano adhesive, there is almost 99% retention of weight of the adhesive, when the adhesive is heated up to 350°C. In order to determine the joint strength, tensile lap shear tests are performed according to ASTM D 5868-95 standard, the results of which are shown in Fig. 1. Considerable increase in joint strength is observed, when the joint is prepared with the SWNT-adhesive according to the invention. When the high performance nano adhesive joint of titanium is exposed to electron beam radiation, an additional considerable increase in joint strength is observed. Failure in analysis of the joints is carried out under Scanning Electron Microscopic studies. Therefrom it can be concluded that, in the first case, SWNT essentially helps in local strengthening of the matrix adhesive leading to maximize the stress transfer and resulting in significant increase of joint strength, and in the second case, the crosslink density of the adhesive increases due to the exposure to electron beam radiation, resulting in further significant increase in adhesive bond strength.

## Claims

1. Epoxy resin adhesive comprising a dotation of nano-substances.

2. Epoxy resin adhesive according to claim 1, wherein the nano-substances are selected from the group comprising carbon-fibre nanotubes, carbon nano-fibres, silicate nano powders.

3. Epoxy resin adhesive according to claim 1 or 2, wherein the nano-substances are dispersed in the adhesive with a weight ratio of at least 1%.

4. Epoxy resin adhesive according to claim 3, wherein the nano-substances are carbon-fibre nanotubes having a weight ratio of approximately 2%.

5. Epoxy raisin adhesive according to claim 3, wherein the nano-substances are silicate nano powders having a weight ratio of approximately 5%.

6. Method for bonding comprising the step of applying an epoxy resin adhesive, **characterized in that** the epoxy resin adhesive is subjected to radiation selected from the group comprising electron beam irradiation, ultra violet radiation, and mixed field radiation.

7. Method according to claim 6, wherein prior to the adhesive being subjected to radiation same is provided with a dotation of nano-substances.

8. Method according to claim 7, wherein the nano-substances are provided to the adhesive at a weight ratio of at least 1%.

9. Method according to claim 7 or 8, wherein carbon fibre nanotubes are provided to the adhesive at a weight ratio of approximately 2%.

10. Method according to claim 7 or 8, wherein silicate nano powders are provided to the adhesive at a weight ratio of approximately 5%.

11. Method according to any on of claims 6-9, **characterized in that** the epoxy resin adhesive is applied on a metal.

12. Method according to claim 11, **characterized in that** the metal's surface is polished and cleaned prior to the application of the epoxy resin adhesive.

13. Method according to claim 11 or 12, **characterized in that** the metal's surface is modified by plasma nitriding implantation prior to the application of the epoxy resin adhesive.

14. Method according to claim 6 or 7, and claim 13, **characterized in that** the radiation of the epoxy resin adhesive is applied following the application of the epoxy resin adhesive to the metal's surface.

15. Method according to any one of claims 8-11, **characterized in that** the metal is selected from the group comprising at least steel, aluminium and titanium.
